# EUROPÄISCHE PATENTSCHRIFT

(11) **EP 1 454 471 B1**
(45) Veröffentlichungstag und Bekanntmachung des Hinweises auf die Patenterteilung: **09.08.2006**
(21) Anmeldenummer: 02787847.9
(22) Anmeldetag: 27.11.2002
(51) Int. Cl.: H04L 29/06

(54) **SYSTEM ZUR ÜBERTRAGUNG EINES DATENSTROMS ÜBER EIN NETZWERK AN UNTERSCHIEDLICHE NETZWERKPROTOKOLLE UNTERSTÜTZENDE EMPFÄNGER**
SYSTEM FOR TRANSMITTING A DATA STEAM OVER A NETWORK TO RECEIVERS THAT SUPPORT DIFFERENT NETWORK PROTOCOLS
SYSTEME POUR LA TRANSMISSION D'UN FLUX DE DONNEES PAR L'INTERMEDIAIRE D'UN RESEAU A DES DESTINATAIRES PRENANT EN CHARGE DES PROTOCOLES DE RESEAU DIFFERENTS

(30) Priorität: 12.12.2001 DE 10160844
(43) Veröffentlichungstag der Anmeldung: 08.09.2004
(73) Patentinhaber: Grundig Multimedia B.V., 1083HJ Amsterdam (NL)
(72) Erfinder: ANHÄUPL, Bernd, 91058 Erlangen (DE)
(74) Vertreter: Pröll, Jürgen
(86) Internationale Anmeldenummer: PCT/EP2002/013363
(87) Internationale Veröffentlichungsnummer: WO 2003/055169

(56) Entgegenhaltungen:
- EP-A- 0 835 037
- EP-A- 1 006 696
- WO-A-01/08151
- WO-A-98/20647
- P. JOHANSSON: "RFC 2734 IPv4 over IEEE 1394" NETWORK WORKING GROUP; REQUEST FOR COMMENTS: 2734 , [Online] 1. Dezember 1999 (1999-12-01), XP002239890 Gefunden im Internet: <URL:http://www.ietf.org/rfc/rfc2734.txt> [gefunden am 2003-04-30] in der Anmeldung erwähnt

## Beschreibung

Die Erfindung betrifft ein System zur Übertragung eines Steuerdaten und Nutzdaten enthaltenden Datenstroms, welches einen Sender, typischerweise mindestens zwei Empfänger, von denen der erste ein erstes Netzwerkprotokoll und der zweite ein zweites Netzwerkprotokoll unterstützt, und ein Netzwerk aufweist, welches zwischen dem Sender und den Empfängern vorgesehen ist.

Zur Vernetzung von Geräten wurde in der Vergangenheit je nach Anwendungsgebiet eine Vielzahl unterschiedlicher physikalischer Netzwerke entwickelt. In vielen Fällen sah man dabei aus Kompatibilitätsgründen neben einer Datenübertragung gemäß netzwerkeigener Netzwerkprotokolle auch Möglichkeiten vor, Daten anderer Netzwerke bzw. anderer Netzwerkprotokolle transparent zu übertragen. Beispielsweise wird in diesem Zusammenhang auf eine Übertragung von IPX-Paketen über dem Internet-Protokoll entsprechende Netzwerke (IP-Netzwerke), eine Übertragung von dem Internet-Protokoll entsprechenden Paketen (IP-Pakete) über Netzwerke nach IEEE Std 1394-1995 bzw. IEEE-Std 1394a-2000 (1394-Netzwerke) und eine Übertragung von MPEG2-Transportströmen über IP-Netzwerke mittels RTP oder 1394-Netzwerke gemäß IEC 61883 hingewiesen. Dabei sind in Abhängigkeit davon, welches Netzwerkprotokoll vom jeweiligen Endgerät unterstützt wird, die eigentlichen Nutzdaten für den Transport auf demselben physikalischen Netzwerk unterschiedlich zu verpacken bzw. zu organisieren.

Dies ist unproblematisch, wenn die verwendeten Netzwerke auch physikalisch nur Punkt-zu-Punkt-Verbindungen gestatten. Dies ist auch unproblematisch, wenn die Nutzdaten nur an jeweils einen Empfänger zu versenden sind.

Anders ist die Situation jedoch dann, wenn die Nutzdaten an verschiedene Empfänger versandt werden sollen, das vorhandene Netzwerk dies zwar physikalisch unterstützt, die einzelnen Empfänger jedoch nur verschiedene, inkompatible Netzwerkprotokolle unterstützen. In einem solchen Fall ist es notwendig, die Nutzdaten über das vorhandene Netzwerk mehrfach, z.B. im Zeitmultiplex, entsprechend verschiedener Netzwerkprotokolle zu übertragen, so dass jeder Empfänger Daten empfangen kann, die dem von ihm unterstützten Netzwerkprotokoll entsprechen. Ein Nachteil dieser mehrfachen Übertragung derselben Nutzdaten besteht darin, dass die auf dem Netzwerk benötigte Übertragungsbandbreite groß ist. Dies kann sogar dazu führen, dass eine gleichzeitige Übertragung der Nutzdaten an alle Empfänger aufgrund einer Überschreitung der verfügbaren Übertragungsbandbreite nicht möglich ist.

Eine andere, grundsätzlich bereits bekannte Möglichkeit besteht darin, den entsprechenden Empfängern Netzwerkübergänge vorzuschalten, durch die ein von diesen nicht unterstütztes Netzwertcprotokoll nach fest vorgegebenen Regeln in ein von ihnen unterstütztes Netzwerkprotokoll transformiert wird. Eine entsprechende Übersetzungsanordnung ist aus der WO 98 20647 A bekannt. Bedingt durch Unterschiede zwischen den Netzwerkprotokollen, ist hierbei eine vollständige Kontrolle des vom jeweiligen Empfänger empfangenen Datenstroms bzw. vollständige Ausnutzung der Möglichkeiten des zugehörigen Netzwerkprotokolls durch den Sender normalerweise nicht mehr gegeben. Selbst wenn dem Sender somit die zu übertragenden Daten bereits in einem bestimmten Netzwerkprotokoll vorliegen, kann nicht gewährleistet werden, dass ein dieses Netzwerkprotokoll verwendender Empfänger die Daten unverändert erhält, wenn auf dem zwischenliegenden Netzwerk ein anderes Netzwerkprotokoll verwendet wird.

Der Erfindung liegt die Aufgabe zugrunde, einen Weg aufzuzeigen, wie eine bandbreiteneffiziente Übertragung eines Datenstroms von einem Sender über ein Netzwerk zu verschiedenen, unterschiedliche Netzwerkprotokolle unterstützenden Empfängern erfolgen kann, ohne dass die vorstehend beschriebenen Nachteile in Kauf genommen werden müssen.

Diese Aufgabe wird durch ein System mit den im Anspruch 1 angegebenen Merkmalen gelöst. Vorteilhafte Ausgestaltungen und Weiterbildungen der Erfindung sind in den abhängigen Ansprüchen 2 bis 12 angegeben. Gegenstand der Ansprüche 13 bis 20 ist einen Sender zur Generierung eines Steuerdaten und Nutzdaten enthaltenden Datenstroms. Die Ansprüche 21 bis 27 betreffen ein dem eigentlichen Empfängerzum Empfang eines Steuerdaten und Nutzdaten enthaltenden Datenstroms vorzuschaltendes Gerät bzw.eine in diesen zu integrierende Verarbeitungseinheit.

Die Vorteile der Erfindung bestehen darin, dass eine mehrfache Übertragung derselben Nutzdaten nicht notwendig ist. Die Nutzdaten werden lediglich gemäß einem einzigen Netzwerkprotokoll übertragen. Allen Empfängern, die dieses Netzwerkprotokoll nicht unterstützen, ist jeweils eine Übersetzungseinheit zugeordnet, welche unter Verwendung der gemäß diesem Netzwerkprotokoll übertragenen Nutzdaten ein dem Netzwerkprotokoll des jeweiligen Empfängers entsprechenden Datenstrom erzeugt. Die genannte Übersetzungseinheit ist dem jeweiligen Empfänger vorgeschaltet oder in diesen integriert.

Ein weiterer Vorteil der Erfindung besteht darin, dass, soweit erforderlich, die vollständige Transparenz für alle unterstützten Netzwerkprotokolle erhalten bleibt. Hierzu werden, zusätzlich zu den eigentlichen Nutzdaten entsprechend dem zur Übertragung genutzten Netzwerkprotokoll, gegebenenfalls für die Umsetzung in die jeweiligen Netzwerkprotokolle der Empfänger erforderliche Zusatzdaten mit übertragen.

Bei diesen Zusatzdaten kann es sich auch ganz oder teilweise um in den Übersetzungseinheiten bei der Erzeugung der Datenströme für die jeweiligen Empfänger zu nützenden Übersetzungsprogrammen bzw. Teilen hiervon entsprechende Daten, d.h. um Übersetzungssoftware handeln. Hierdurch kann auch eine Erweiterung des Systems im Hinblick auf zukünftige Erweiterungen des jeweiligen Netzwerkprotokolls oder im Hinblick auf neue Netzwerkprotokolle in einfacher Weise durchgeführt werden.

Empfänger, die das zweite Netzwerkprotokoll unterstützen, können gemäß einer vorteilhaften Ausgestaltung der Erfindung über ein Hilfsnetzwerk an eine gemeinsame Übersetzungseinheit angeschlossen sein, die wiederum an das Hauptnetzwerk angeschlossen ist und den über das Hauptnetzwerk gemäß dem ersten Netzwerkprotokoll übertragenen Datenstrom in einen dem zweiten Netzwerkprotokoll entsprechenden Datenstrom übersetzt.

Wird eine Überprüfungseinheit verwendet, wie sie Gegenstand des Anspruchs 9 ist, dann ist sichergestellt, dass stets derjenige Datenstrom übertragen wird, der die geringere Übertragungsbandbreite benötigt.

Wird eine Überprüfungseinheit verwendet, wie sie Gegenstand des Anspruchs 11 ist, dann ist sichergestellt, dass nur solche Zusatzinformation bzw. Übersetzungsvorschriften entsprechende Daten gesendet werden, die empfangsseitig auch tatsächlich verarbeitet werden können. Hierdurch ist weitestgehende Kompatiblität mit bereits vorhandenen Empfängern erzielbar.

Weitere vorteilhafte Eigenschaften der Erfindung ergeben sich aus deren beispielhafter Erläuterung anhand der Figuren. Es zeigt
- Figur 1: ein Blockschaltbild eines Systems gemäß der Erfindung,
- Figur 2: eine Skizze zur Veranschaulichung einer isochronen Übertragung in 1394-Netzwerken,
- Figur 3: eine Erweiterung des 1394ARP-Protokolls,
- Figur 4: das GASP-Format,
- Figur 5: einen "encapsulation header",
- Figur 6: einen weiteren "encapsulation header",
- Figur 7: eine IGMP-Anfrage,
- Figur 8: ein MCAP-Format,
- Figur 9: Eintragsformate der "indirect_channel_list" nach Figur 8,
- Figur 10: ein Format für diverse Einträge in die "indirect_channel_list",
- Figur 11: einen Ipv4-Header,
- Figur 12: einen IP-Header-Option mit Längenangabe,
- Figur 13: einen Aufbau eines Headers von Konfigurationsanfragen/Konfigurationsmeldungen und
- Figur 14: Einzelelemente einer Konfigurationsanfrage/-meldung.

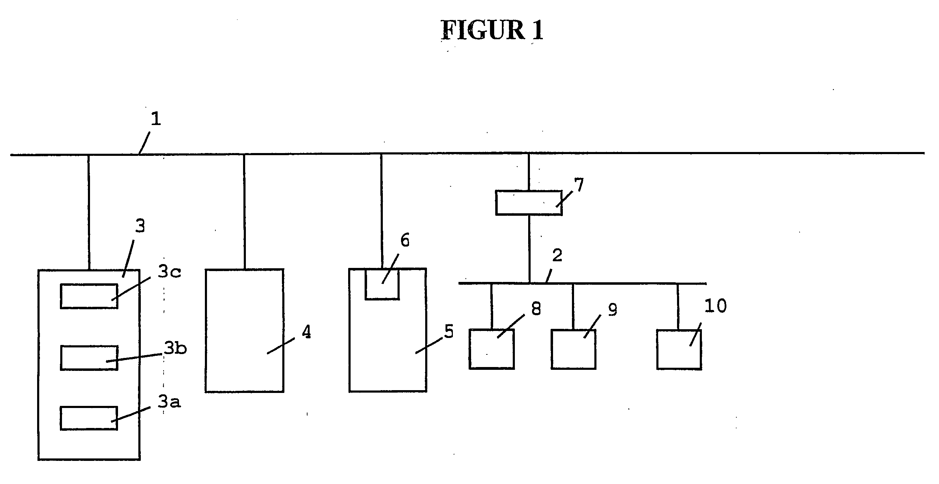

Die Figur 1 zeigt ein Blockschaltbild eines Systems zur Übertragung eines Steuerdaten und Nutzdaten enthaltenden Datenstroms. Beispielsweise handelt es sich bei dem zu übertragenden Datenstrom um einen MPEG2-Transportstrom, welcher über ein 1394-Netzwerk gemäß IEC 61883-1 in Verbindung mit IEC 61883-4 oder über ein dem IP-Netzwerk mittels RTP übertragen werden soll. In diesem Datenstrom liegen die zu übertragenden Audio-/Video-Nutzdaten in Form von aufeinanderfolgenden Datenpaketen vor. Den Datenpaketen sind jeweils Header zugeordnet, in welchen netzwerkprotokollspezifische Zusatzinformationen übertragen werden. Derartige Zusatzinformationen sind beispielsweise Sender- und Empfängerangaben, Zeitmarken und Prüfsummen. Der Umfang dieser Zusatzinformationen ist im allgemeinen im Vergleich zum Umfang der Audio-/Video-Nutzdaten klein. Die Verteilung der Audio-/Video-Nutzdaten auf die einzelnen Datenpakete kann in Abhängigkeit vom verwendeten Netzwerkprotokoll verschieden sein. Beispielsweise werden typischerweise bei einer Übertragung eines MPEG2-Transportstromes die Audio-/Videodaten, die mehreren Paketen des IEEE 1394-1995-Standards entsprechen, einem einzigen Paket des Internet-Protokoll-Standards zugeordnet.

Im folgenden wird davon ausgegangen, dass bei dem in der Figur 1 gezeigten System ein MPEG2-Transportstrom über ein 1394-Netzwerk 1 gleichzeitig an verschiedene Empfänger übertragen werden soll, welche unterschiedliche Netzwerkprotokolle unterstützen.

Der über das Netzwerk 1 zu übertragende Datenstrom, welcher Steuerdaten und Audio-/Video-Nutzdaten enthält, wird von einem Sender 3 zur Verfügung gestellt. Dieser Sender 3 weist Mittel 3a zur Generierung eines einem ersten Netzwerkprotokoll, das hier durch die Normen IEC 61883-1 und IEC 61883-4 in Verbindung mit IEEE Std 1394-1995 und IEEE Std 1394a-2000 definiert sei, entsprechenden Datenstroms auf. Der vom Sender 3 generierte Datenstrom wird über das Netzwerk 1 an eine Vielzahl von Empfängern übertragen.

Ein erster Empfänger 4 unterstützt das erste, durch die Normen IEC 61883-1 und IEC 61883-4 in Verbindung mit IEEE Std 1394-1995 und IEEE Std 1394a-2000 festgelegte Netzwerkprotokoll. Folglich kann der empfangene Datenstrom im Empfänger 4 ohne weiteres ausgewertet werden, beispielsweise im Sinne einer Selektion und Decodierung von Audio-/Videodaten, die einem gewünschten Fernsehrundfunkprogramm entsprechen. Der Empfänger 4 kann ein Fernsehgerät sein, auf dessen Display die dem Fernsehrundfunkprogramm entsprechenden Bildsignale dargestellt werden.

Ein zweiter Empfänger 5 unterstützt dieNormen IEC 61883-1 und IEC 61883-4 nicht, sondern lediglich ein zweites Netzwerkprotokoll, beispielsweise den Internet-Protokoll-Standard, sowie speziell z.B. das darauf basierende real-time transport protocol (RTP) gemäß RFC 1889, in Verbindung mit RFC 2038: RTP Payload Format for MPEG1/MPEG2 Video. Um auch diesem Empfänger eine Auswertung der gemäß den Normen IEC 61883-1 in Verbindung mit IEC 61883-4 übertragenen Signale zu ermöglichen, weist der zweite Empfänger 5 eine integrierte Übersetzungseinheit 6 auf. Diese ist dazu vorgesehen, die gemäß den Normen IEC 61883-1 in Verbindung mit IEC 61883-4 beziehungsweise dem ersten Netzwerkprotokoll übertragenen Signale in dem Internet-Protokoll-Standard bzw. dem zweiten Netzwerkprotokoll entsprechende Daten umzuwandeln. Diese dem zweiten Netzwerkprotokoll entsprechenden Daten können im zweiten Empfänger 5 ohne weiteres ausgewertet werden, beispielsweise im Sinne einer Selektion und Decodierung von Audio-/Videodaten, die einem gewünschten Fernsehrundfunkprogramm entsprechen.

Der Empfänger 5 kann ein Personalcomputer sein, auf dessen Display die dem Fernsehrundfunkprogramm entsprechenden Bildsignale dargestellt werden.

Die in der Figur 1 dargestellten Empfänger 8 und 9 sind ebenfalls Empfänger, die das zweite Netzwerkprotokoll unterstützen. Diese Empfänger 8 und 9 sind an ein Hilfsnetzwerk 2 angeschlossen. Das Hilfsnetzwerk 2 ist über eine Übersetzungseinheit 7 mit dem Hauptnetzwerk 1 verbunden. Die Übersetzungseinheit 7 ist dazu vorgesehen, den gemäß dem IEEE-1394-Standard in Verbindung mit den Normen IEC 61883-1 sowie IEC 61883-4 über das Hauptnetzwerk 1 übertragenen, dem ersten Netzwerkprotokoll entsprechenden Datenstrom in einen Datenstrom umzusetzen, der dem zweiten Netzwerkprotokoll entspricht. Dieser dem zweiten Netzwerkprotokoll entsprechende Datenstrom wird an das Hilfsnetzwerk 2 weitergeleitet und über dieses an die Empfänger 8 und 9 übertragen.

Alternativ zu der in der Figur 1 gezeigten Ausführungsform ist es auch möglich, die Empfänger 8 und/oder 9 über jeweils eine eigene externe Übersetzungseinheit mit dem Hauptnetzwerk 1 zu verbinden, ohne dass ein gemeinsames Hilfsnetzwerk verwendet wird.

Alternativ ist es ebenfalls möglich, die Übersetzungseinheit 7 so zu gestalten, daß Empfänger 10, die lediglich ein drittes Netzwerkprotokoll unterstützen, zusätzlich über ein gemeinsames oder getrenntes Hilfsnetz 2 mit dieser Übersetzungseinheit 7 verbunden werden können. Die Übersetzungseinheit 7 empfängt dann, soweit hierzu erforderlich, weitere Zusatzinformtionen die sie zur Erzeugung von Daten benötigt, die diesem dritten Netzwerkprotokoll entsprechen, erzeugt damit diese Daten und leitet sie an den oder die Empfänger 10 über das entsprechende Hilfsnetz 2 weiter.

Die Übersetzungseinheiten 6 und 7 benötigen Übersetzungsvorschriften für den jeweiligen Übersetzungsvorgang. Diese Übersetzungsvorschriften, die in Form eines Übersetzungsprogrammes und/oder in Form von netzwerkprotokollabhängigen Zusatzdaten vorliegen, können in der jeweiligen Übersetzungseinheit fest abgespeichert sein. Alternativ dazu werden die genannten Übersetzungsvorschriften jedoch zumindest teilweise im übertragenen Datenstrom vom Sender zum Empfänger übertragen, wobei die letztere Ausführungsform bevorzugt ist.

Zu diesem Zweck weist der Sender 3 Mittel 3b zum Erzeugen und Einsetzen von Übersetzungsvorschriften entsprechenden Daten in den zu übertragenden Datenstrom auf. Diese den Übersetzungsvorschriften entsprechenden Daten werden im Datenstrom auf die Empfangsseite übertragen, dort im jeweiligen Empfänger bzw. der jeweiligen Übersetzungseinheit, ggf. soweit für den Übersetzungsvorgang erforderlich, aus dem übertragenen Datenstrom abgetrennt und von der Übersetzungseinheit zum jeweiligen Übersetzungsvorgang verwendet.

Die Übertragung von Übersetzungsvorschriften entsprechenden Daten vom Sender über das Netzwerk zu den Empfängern hat unter anderem den Vorteil, dass das System in einfacher Weise im Hinblick auf Erweiterungen bestehender Netzwerkprotokolle oder im Hinblick auf neue Netzwerkprotokolle angepasst werden kann.

Alternativ hierzu kann die Übertragung der Zusatzdaten vom Sender zum Empfänger ganz oder teilweise auch über ein oder mehrere logisch oder auch physikalisch getrennte zusätzliche Netzwerke erfolgen. In diesem Fall setzt Mittel 3b die Übersetzungsvorschriften entsprechenden Daten nicht direkt in den übertragenen Datenstrom ein sondern leitet sie lediglich über die logisch oder auch physikalisch getrennten Netzwerke direkt den empfängerseitigen Übersetzungseinheiten zu. Hierbei kann z.B. bereits senderseitig durch Mittel 3b eine Trennung der Zusatzdaten nach den empfängerseitigen Netzwerkprotokollen vorgenommen werden. Die empfängerseitigen Übersetzungseinheiten sind dann zumindest auch mit denjenigen zusätzlichen Netzwerken zu verbinden, über die Zusatzdaten für den Übersetzungsvorgang in die Netzwerkprotokolle derjenigen Empfänger übertragen werden, denen sie zugeordnet sind.

Um sicherzustellen, dass eine bandbreiteneffiziente Übertragung vorliegt, weist der Sender 3 gemäß einer Weiterbildung der Erfindung eine Überprüfungseinheit 3c auf. Diese ist zu einer Überprüfung vorgesehen, ob eine Übertragung eines die Übersetzungsvorschriften enthaltenden Datenstroms über das Netzwerk 1 mehr Übertragungskapazität benötigt als eine Übertragung eines Datenstroms, in welchem die Nutzdaten mehrfach, z.B. im Zeitmultiplex gemäß mehrerer verschiedener Netzwerkprotokolle enthalten sind. Erkennt die Überprüfungseinheit 3c, dass der die Übersetzungsvorschriften enthaltende Datenstrom weniger Übertragungskapazität benötigt als ein Datenstrom, in welchem die Nutzdaten mehrfach, z.B. im Zeitmultiplex gemäß mehrerer verschiedener Netzwerkprotokolle enthalten sind, dann gibt der Sender 3 den die Übersetzungsvorschriften enthaltenden Datenstrom an das Netzwerk 1 ab. Erkennt die Überprüfungseinheit 3c hingegen, dass der die Übersetzungsvorschriften enthaltende Datenstrom mehr Übertragungskapazität benötigt als ein Datenstrom, in welchem die Nutzdaten mehrfach, z.B. im Zeitmultiplex gemäß mehrerer verschiedener Netzwerkprotokolle enthalten sind, dann gibt der Sender 3 den Datenstrom an das Netzwerk 1 ab, in welchem die Nutzdaten mehrfach, z.B. im Zeitmultiplex gemäß mehrerer verschiedener Netzwerkprotokolle enthalten sind.

Die vorstehend beschriebene Überprüfung kann für ein einzelnes Datenpaket, für eine Gruppe von Datenpaketen oder für den gesamten Nutzdatenstrom erfolgen.

Gemäß einer anderen Weiterbildung der Erfindung ist die im Sender 3 enthaltene Überprüfungseinheit 3c zu einer Überprüfung vorgesehen, welche Netzwerkprotokolle, bzw. inwieweit Übersetzungsvorschriften von den an das Netzwerk 1 angeschlossenen Empfängern, die einen bestimmten Nutzdatenstrom empfangen sollen, unterstützt werden. Dies erlaubt es dem Sender, nur solche Zusatzdaten bzw. Übersetzungsvorschriften einem zu übertragenden Datenstrom hinzuzufügen, die alle an das Netzwerk 1 angeschlossenen Empfänger, die den jeweiligen Nutzdatenstrom empfangen sollen, auch interpretieren können. Sofern notwendig schaltet diese Überprüfungseinheit auf eine mehrfache Übertragung des Nutzdatenstroms, z.B. im Zeitmultiplex, gemäß den verschiedenen von den Empfängern unterstützten Netzwerkprotokollen um. Hierdurch wird Kompatibilität auch mit bereits vorhandenen Empfängern erreicht.

Die vorstehend beschriebene Überprüfung wird beispielsweise dadurch ermöglicht, dass der Sender 3 über das Netzwerk 1 Abfragesignale an die an das Netzwerk 1 angeschlossenen Empfänger aussendet und die Empfänger jeweils über das Netzwerk 1 Daten an den Sender 3 zurücksenden, welche Informationen über die vom jeweiligen Empfänger unterstützten Netzwerkprotokolle enthalten.

Nachfolgend werden weitere Details der Erfindung bei einer Anwendung auf IEEE-1394-Netzwerke beschrieben, wie sie beispielsweise im IEEE Standard 1394-1995: "Standard for a High Performance Serial Bus" in Verbindung mit der Erweiterung IEEE Std 1394a-2000 sowie IEC 61883: "Consumer Audio/Video Equipment - Digital Interface -" und im IEEE P 1394.1: "Draft Standard for High Performance Serial Bus Bridges" offenbart sind.

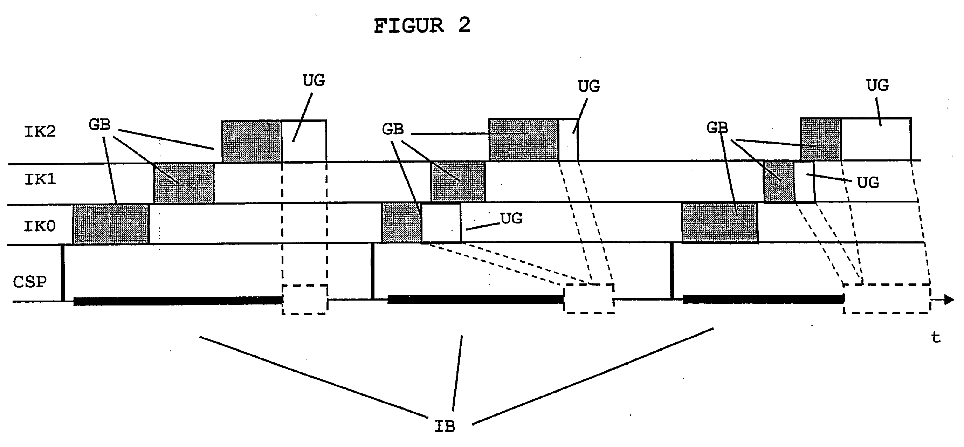

Die Art und Weise einer Übertragung von Datenströmen in 1394-Netzwerken ist in der Figur 2 gezeigt. Durch vom sogenannten "Cycle Master" regelmäßig ausgesandte "Cycle Start"-Pakete wird die Zeitachse in Intervalle von jeweils annähernd 125 µs unterteilt. Vor Beginn einer sogenannten isochronen Übertragung wird zunächst dem Datenstrom eine Kanalnummer zugeordnet und ein fester, maximaler Zeitanteil innerhalb dieser Zyklen reserviert. Nach Empfang eines jeden Cycle-Start-Paketes senden dann die einzelnen Geräte für jeden ihnen zugeordneten isochronen Kanal nacheinander jeweils maximal ein Datenpaket aus, wobei bei vorgegebener durchschnittlicher Bitrate einerseits und anwendungsspezifisch zulässigen Nutzdatenpaketgrößen andererseits, häufig nicht in jedem Zyklus die gesamte reservierte Übertragungszeit ausgeschöpft wird. Der Rest steht zusammen mit der übrigen, nicht reservierten Übertragungszeit für die Datenübertragung über sogenannte asynchrone Kanäle sowie den Austausch von Steuerinformationen zur Verfügung. Hier ist zwar nicht gewährleistet, daß jedes Gerät in jedem Zyklus Sendezeit erhält, andererseits können jedoch, ausreichend Sendezeit vorausgesetzt, mehrere Datenpakete mit gleicher Kanalnummer im selben Zyklus versandt werden.

In der Figur 2 sind mit IK0 ein isochroner Kanal 0, mit IK1 ein isochroner Kanal 1, mit IK2 ein isochroner Kanal 2, mit CSP die Cycle-Start-Pakete, mit GB die genutzte Bandbreite, mit UG die ungenutzte, aber reservierte Bandbreite und mit IB die für die isochrone Übertragung genutzte/reservierte Bandbreite bezeichnet.

Für die Übertragung des Nutzdatenstroms für dem Empfänger 4 in der Figur 1 entsprechende Geräte wird man typischerweise einen isochronen, ggf. auch asynchronen 1394-Kanal einsetzen. Entsprechend können auch die Übersetzungsprogramme isochron oder asynchron übertragen werden. Verschiedene mögliche Varianten bei der Übertragung und Interpretation von Übersetzungsprogrammen können durch anderweitig übertragene Zusatzinformationen bzw.Konfigurationskommandos ausgewählt werden.

Bei einer isochronen Übertragung von Nutzdatenstrom und Übersetzungsprogrammen bietet es sich an, die Übersetzungsprogramme ebenfalls isochron zu übertragen. Die Zuordnung der Nutzdatenpakete zu den jeweiligen Übersetzungsprogrammpaketen kann dann anhand des isochronen Zyklus stattfinden, in dem die Übertragung erfolgt. Man beachte, daß diese Zuordnung auch über 1394.1-konforme Bridges erhalten bleibt. Sieht man über die im aktuellen Zyklus übertragenen isochronen Daten hinaus zusätzlichen Speicher vor, in dem Daten vorhergehender isochroner Zyklen zwischengespeichert werden, so lassen sich auch diese durch die. Übersetzungsprogramme referenzieren. Speziell kann man für jeden benötigten isochronen Kanal einen FIFO-Speicher fester Größe vorsehen. Die einzelnen Nutzdatenpakete lassen sich dann z.B. anhand
a) der Kanalnummer und dem Abstand der isochronen Zyklen,
b) der Kanalnummer und zumindest einem Teil der obersten 20 Bit des CYCLE_TIME-Registers bei Aussendung des Paketes (man beachte, daß bei 1394.1 Netzen die Verzögerung jedes isochronen Kanals dem Initiator der Verbindung bekannt gegeben wird, so daß empfängerseitig auch der Wert des CYCLE-TIME-Registers für den Empfängerbus bestimmt werden kann, sofern der Empfänger mit dem Initiator identisch ist, oder von diesem der Wert an den Empfänger weitergeleitet wurde),
c) speziell bei IEC 61883-konformen isochronen Datenströmen (ggf. zusätzlich zur Kanalnummer) auch anhand entsprechender Felder des CIP-Headers (insbesondere DBC, ggf. in Verbindung mit SID und FMT),
d) sonst (ggf. zusätzlich zur Kanalnummer) anhand formatspezifischer sonstiger Teile der (Nutz-)Datenpakete
referenzieren. Eventuelle Mehrdeutigkeiten können anhand des Alters bzw. der Position der Pakete innerhalb der FIFO-Speicher (Auswahl des zuletzt empfangenen Paketes) aufgelöst werden.

Sieht man zusätzlichen Speicher auch für Übersetzungsprogramme vor (speziell z.B. eine feste Größe pro für Übersetzungsprogramme genutztem isochronen Kanal; diese können auch mit dem Nutzdatenpuffer für diesen Kanal identisch sein), so kann man bei der Übertragung der Übersetzungsprogramme diese auch auf mehrere isochrone Zyklen verteilen. Hierdurch kann speziell bei niedrigen Nutzdatenraten die für Übersetzungsprogramme zu reservierende Bandbreite verringert werden. Zusätzlich ist bei der Abarbeitung der Übersetzungsprogrammteile dann zumindest deren Vollständigkeit insoweit sicherzustellen, als ein zu erzeugendes Datenpaket durch mehrere Übersetzungsprogrammpakete beschrieben wird. Hierzu wird man speziell die Übersetzungsprogrammpakete zyklisch nummerieren (z.B. mittels des DBC-Feldes bei Verwendung des CIP-Formates) und bei Ausfall eines Übersetzungsprogrammpaketes das aktuelle (unvollständige) Paket verwerfen sowie die Übersetzungsprogrammteile bis zum Auftreten eines geeigneten Synchronisationspunktes nicht ausführen.

Da jederzeit Nutzdaten als auch Übersetzungsprogramme entsprechend der reservierten Bandbreite übertragen werden können und der Sender a priori ermitteln kann, ob im Empfänger eine Dekodierung angesichts der bekannten Pufferkapazitäten möglich ist, sind, abgesehen von Sonderfällen wie Bus-Resets, keine Paketverluste zu erwarten.

Soweit die Unterscheidung zwischen den obigen und ggf. anderen Möglichkeiten in einer speziellen Implementierung nicht einheitlich für alle verwendeten Übersetzungseinheiten festgelegt wird, ist den Übersetzungseinheiten jeweils durch geeignete Konfigurationsbefehle die verwendete Variante mitzuteilen bzw. zwischen Sender und empfängerseitigen Übersetzungseinheiten auszuhandeln.

Optional kann zur Verringerung des Speicherbedarfs in den Übersetzungseinheiten diesen durch Konfigurationskommandos mitgeteilt oder zwischen Sender und empfängerseitigen Übersetzungseinheiten ausgehandelt werden, über welche Kanäle Datenpakete und/oder Übersetzungsprogramme übermittelt werden und in welchem Umfang (z.B. nach Gesamtgröße, Paketanzahl, Zyklusanzahl, oder entsprechenden Kombinationen) Übersetzungsprogrammpakete und/oder Datenpakete auf den entsprechenden Kanälen für nachfolgende Übersetzungsprogramme zwischenzuspeichern sind.

Unabhängig von der genauen Übertragung kann das Übersetzungsprogramm speziell aus einem eigentlichen Programmteil und ggf. einem nachfolgenden Datenteil bestehen. Für den jeweiligen Übersetzungsprogrammteil sei außerdem der Wert der oberen 20 Bit des cycle_count-Registers zum Zeitpunkt des vollständigen Empfangs dieses Programmteils bekannt.

### Möglicher Befehlssatz:

### NOP

Dieser Befehl hat keine Wirkung und dient insbesondere dazu, um nachfolgende Befehle ggf. geeignet auf Wortgrenzen auszurichten.

### ADD add

Dieser Befehl erhöht die Länge des nächstfolgenden CPY-, CPYIM- bzw. SKIP-Befehls um "add" Oktets.

### GEN start len mask value

Durch diesen Befehl wird ein zusätzliches Vergleichsmuster zur Auswahl eines Nutzdatenpaketes bestimmt. "start" bezeichnet den Beginn, "len" die Länge in Oktets des durch "mask" und "value" beschriebenen Vergleichsmusters.

### SKIP s.

Wähle, soweit noch nicht geschehen, ein durch vorausgehende GEN, DBC, CIP, CYC, CHAN-Befehle spezifiziertes Nutzdatenpaket aus, überspringe dort 4s sowie zusätzlich die ggf. durch einen seit dem letzten CPY oder SKIP ausgeführten ADD-Befehl spezifizierte Anzahl Oktets.

### DBC v

Dieser Befehl selektiert CIP-Pakete, deren DBC-Feld mit "v" übereinstimmt.

### CIP sid fmt dbc

Dieser Befehl selektiert CIP-Pakete die hinsichtlich der Felder SID, FMT und DBC mit dem durch "sid", "fmt" und "dbc" spezifizierten Vergleichsmuster übereinstimmen, wobei ggf. auch "Wildcards" verwendet werden können.

### CYC c

Dieser Befehl selektiert isochrone Paket aufgrund des isochronen Zyklus, in dem es abgesandt wurde, wie durch den Parameter "c" spezifiziert. Gleichzeitig wird die Wirkung aller vorherigen GEN-, DBC-., und CIP-Befehle aufgehoben.

### CHAN c

Dieser Befehl selektiert Pakete mit der Kanalnummer "c". Gleichzeitig wird die Wirkung aller vorherigen GEN-, DBC-, und CIP-Befehle aufgehoben.
Bei 1394.1-Netzwerken bezeichnet "c" sinnvollerweise nicht direkt einen Kanal, sondern z.B. ein "output-Plug"-Register des Senders. Dieser Wert ist daher zunächst durch die zugehörige Kanalnummer des lokalen 1394-Busses zu ersetzen (bekannt aufgrund des durch vorherige Konfigurationskommandos erfolgten Verbindungsaufbaus).

### CPY s

Füge die nächsten 4s, sowie zusätzlich die durch einen ggf. seit dem letzten SKIP, CPY-oder CPYIM-Befehl bearbeiteten ADD-Befehl spezifizierte Anzahl Oktets aus dem zuletzt ausgewählten Paket an das aktuell zu bildende Paket an.

### STOP

Beende das Übersetzungsprogramm und sende ggf. das zuletzt gebildete Datenpaket. (Im Übersetzungsprogrammpaket folgen nur noch Daten).

### CPYIM s

Füge die im Übersetzungsprogramm folgenden 4s sowie zusätzlich die durch einen ggf. seit dem letzeten SKIP, CPY, oder CPYIM-Befehl bearbeiteten ADD-Befehl spezifizierte Anzahl Oktets an das aktuell zu bildende Paket an.

Schließlich sei noch darauf hingewiesen, daß, allerdings in Abweichung von der IEEE 1394/IEC 61883-Spezifikation, ggf. auch auf die Reservierung zusätzlicher Bandbreite für den Übersetzungsprogrammkanal insoweit verzichtet oder diese zumindest reduziert werden kann, als durch den Nutzdatenstrom die reservierte Übertragungszeit pro Kanal ausreichend oft nicht vollständig ausgeschöpft wird, da dann in den entsprechenden isochronen Zyklen der vom Übersetzungsprogrammkanal beanspruchte Sendezeitanteil umgekehrt die zugehörige Reservierung entsprechend übertreffen kann, ohne daß der für isochrone Kanäle insgesamt reservierte Zeitanteil überschritten werden kann.

Bei einer asynchronen Übertragung von Nutzdatenstrom oder Übersetzungsprogrammen kann, sofern empfängerseitig auch bei asynchronen Paketen der zugehörige Wert des CYCLE-TIME-Registers bei dessen Absendung bekannt ist, auch hier der für den isochronen Nutzdatenstrom beschriebene Weg beschritten werden. Allerdings ist dies, speziell über 1394.1-Bridges hinweg, normalerweise nicht der Fall. Zur Identifizierung einzelner Nutzdatenpakete stehen daher normalerweise neben der Kanalnummer, sowie bei GASP-Paketen der Absenderangabe (source_id-Feld), nur die unter c) und d) im vorherigen Abschnitt beschriebenen Möglichkeiten zur Verfügung. Hinsichtlich der Pufferung von Nutzdaten- bzw. Übersetzungsprogrammstrom ergeben sich die gleichen Möglichkeiten wie im isochronen Fall, allerdings muß bei fest vorgegebenen Puffergrößen damit gerechnet werden, daß zum Zeitpunkt, an dem eine Übersetzung theoretisch möglich wird, Nutz- bzw. Übersetzungsprogrammpakete im Empfänger nicht mehr vorliegen. Dies entspricht einem Paketverlust in normalen, nicht qualitätsgesicherten Verbindungen bei hoher Netzlast.

Im folgenden wird beispielhaft ein Befehlssatz der Übersetzungsprogramme skizziert:

### CONTINUE

Setze das Übersetzungsprogramm mit dem nächsten Übersetzungsprogrammpaket fort, ohne das aktuell gebildete Datenpaket abzuschließen.

### CPYIMN s

Wie CPYIM, jedoch sende zusätzlich das gebildete Datenpaket.

Nachfolgend werden weitere Details der Erfindung bei einer Anwendung auf eine Übertragung von IP-Paketen beschrieben.

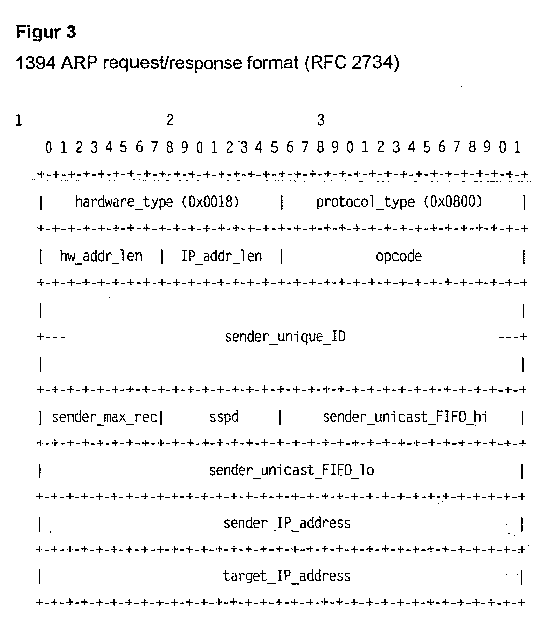

Zu einer Unterscheidung zwischen IPover1394-Geräten mit und ohne vorgeschaltete Übersetzungseinheit sind folgende Mechanismen verwendbar:
- Erweiterung des 1394ARP-Protokolls (vgl. Figur 3):
   Übersetzungseinheiten senden auf ARP-Requests (opcode=1) zusätzlich zur bisherigen ARP-Response (opcode=2) ein ARP-Paket mit anderem Opcode, speziell z.B. opcode=3. Gleichzeitig wird ggf. in sender_unicast_FIFO_hi/lo die FIFO-Adresse für Übersetzungsprogrammpakete mitgeteilt.
- KonfigurationsROM:
   Zusätzlich zum bisherigen Eintrag mit unit_spec_ID=0x00005E und unit_sw_version=0x000001 wird ein weiterer Eintrag mit einer anderen Kombination aus unic_spec_ID und unit_sw_version angelegt, z.B. speziell unit_spec_ID=0x00005E und unit_sw_version=0x000002.

Sender zeigen ggf. ebenfalls durch eine der beiden Möglichkeiten an, ob sie Übersetzungsprogrammpakete senden können.

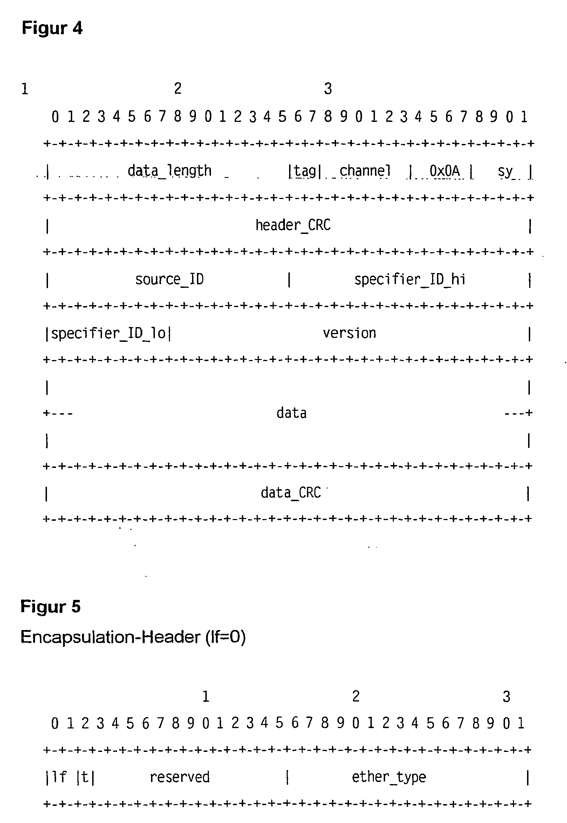

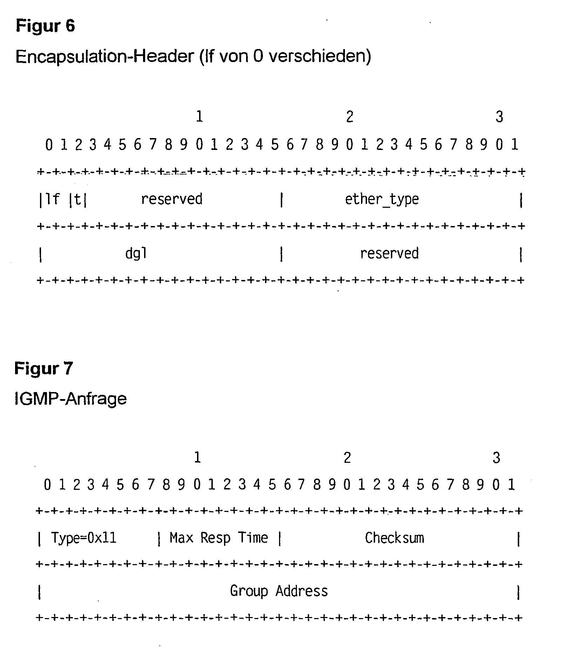

Zu einer Übertragung der Übersetzungsprogramme wird, sofern die Übersetzungsprogramme über asynchrone oder isochrone Kanäle übertragen werden, hierzu das GASP-Format verwendet, wie es in P. Johansson: IPv4 over IEEE 1394, Dezember 1999 (RFC 2734) beschrieben ist (vgl. Figur 4). Das eigentliche Übersetzungsprogramm steht ggf. nach einem "encapsulation header" nach Figur 5 bzw. falls "If" von 0 verschieden ist nach Figur 6 zu Beginn des "data"-Bereichs. Wird in einer speziellen Implementierung dieser "encapsulation header" in GASP-Paketen verwendet, so kann die Unterscheidung zwischen gewöhnlichen IPover1394-Paketen und Übersetzungsprogrammpaketen anhand des bisher reservierten "t"-bits (t=0: IPover1394-Paket, t=1 Übersetzungsprogrammpaket) oder aber durch einen eigenen "ether_type" erfolgen. Andernfalls ist zur Unterscheidung das "version"-Feld des GASP-Paketes zu verwenden, z.B. durch "version=1" für IPover1394-Pakete und "version=2" für Übersetzungsprogrammpakete.

Alternativ kann im Falle isochroner Übertragung auch ein speziell zu definierendes CIP-FMT-verwendet werden. Hierdurch ergibt sich ein niedrigerer Bandbreitenbedarf, da der Overhead für die entsprechenden Header hier kleiner sein kann. Der GASP-Header sollte dann überflüssig sein, da ein isochroner Kanal nicht gleichzeitig von mehreren Sendern benützt wird.

Sofern in einer Implementierung auch Übersetzungsprogramme durch 1394-block-writes übermittelt werden, sind diese an die aus der ARP-Antwort zuständige FIFO-Adresse zu richten. Wenn sich diese in einer speziellen Implementierung von derjenigen für gewöhnliche IPover1394-Pakete unterscheidet, kann dann für Übersetzungsprogramme auf die Übertragung des "encapsulation header"s verzichtet werden. Andernfalls erfolgt die Unterscheidung zwischen beiden Pakettypen wieder über dessen "t"-bit oder den "ether_type".

Im folgenden wird die Ermittlung der an einer Übertragung beteiligten Empfänger beschrieben.

Im Falle von IP-Unicasts ist lediglich, wie oben beschrieben, zu prüfen, ob dem jeweiligen nächsten Empfänger eine Übersetzungseinheit zugeordnet ist.

Ähnlich stellt sich die Situation für IP-Broadcasts dar. Hier ist der Test auf alle IPover1394-fähigen Geräte zu erstrecken.

Dieses Verfahren kann auch bei Multicasts angewandt werden, ist hier allerdings häufig unnötig restriktiv. Im folgenden sollen Möglichkeiten angesprochen werden, wie genauer unterschieden werden kann, ob jedem tatsächlichen Empfänger eine Übersetzungseinheit vorgeschaltet ist:
- Empfänger ohne IP-Router-Funktionalität:
   Zur Ermittlung von Empfängern ohne zugeordnete Übersetzungseinheit ist das IGMP-Protokoll zu verwenden. Ein Sender S übermittelt hierzu unaufgefordert eine IGMP-Anfrage gemäß Figur 7 an die jeweilige Multicast-Adresse, nachdem er vorher alle Übersetzungseinheiten auf andere Weise, z.B. über ein geeignetes Konfigurationspaket, davon unterrichtet hat, dieses IGMP-Paket nicht weiterzuleiten. Es werden daher nur Multicast-Empfänger ohne Übersetzungseinheit antworten. Bleibt die Antwort aus, so sind zur Zeit keine Empfänger ohne Übersetzungseinheit auf der Multicastadresse aktiv.
   Unter IGMPv2 wird man zusätzlich eine möglichst kurze Antwortzeit "Max Resp Time" vorgeben. In einer speziellen Implementierung kann auch festgelegt werden, daß von Sendern, die die Verwendung von Übersetzungsprogrammpakete unterstützen und diese bekanntgegeben haben, IGMP-Anfragen mit einer speziellen maximalen Antwortzeit, z.B. "Max Resp Time"=1, nur zur Ermittlung von Empfängern ohne Übersetzungseinheit verwendet werden. In diesem Fall kann auf eine gesonderte Unterrichtung der Übersetzungseinheiten über eine nachfolgende derartige IGMP-Anfrage verzichtet werden.
   Unter IGMPv3 ist festgelegt, daß jeder Empfänger auf IGMP-Anfragen antworten muß, daher kann hier nach einer entsprechenden Anfrage analog zu Broadcast-Paketen verfahren werden. Bzüglich IGMPv3 wird auf Cain, u. a.: Internet Group Management Protocol, Version 3, März 2001 (Internet Draft: draft-ietf-idmr-igmp-v3-07) hingewiesen.
   Durch Überwachung der IGMP-Meldungen, die jeder Empfänger vor Teilnahme an einer Multicast-Adresse unaufgefordert abschickt, kann zudem festgestellt werden, ob neue Empfänger einer bestehenden Multicast-Adresse beitreten. Für diese Empfänger kann dann die Unterscheidung wieder wie oben beschrieben erfolgen.
- Empfänger mit Router-Funktionalität:
   Sofern in einem speziellen IPover1394-Netzwerk kein eigenes Routing-Protokoll verwendet wird, erfolgt die Ermittlung empfangender IP-Router wie für Empfänger ohne Router-Funktionalität.
   Andernfalls hängt die Vorgehensweise vom jeweiligen Routing-Protokoll ab:
      Beispielsweise verwaltet bei DVMRP jeder Router für jede Multicast-Adresse eine Liste aller von ihm belieferten Empfänger. Daher kann ein Sender, zumindest falls er selbst am Routing-Protokoll teilnimmt, feststellen, welche Empfänger mit Router-Funktionalität er beliefert. Bezüglich DVMRP wird auf T. Pusateri: Distance Vector Multicast Routing Protocol, August 2000 (Internet Draft:draft-ietf-idmr-dvmrp-v3-10) verwiesen.
      Falls eine genaue Ermittlung aller empfangenden Router nicht möglich ist, so läßt sich typischerweise durch die Teilnahme am jeweiligen Routing-Protokoll zumindest ermitteln, welche Router im lokalen Subnetzwerk vorhanden sind und jeder dieser Router als möglicher Empfänger betrachten.

Im folgenden wird eine Übermittlung der Kanalbelegung in 1394.1-Netzwerken und anderer Zusatzinformationen beschrieben.

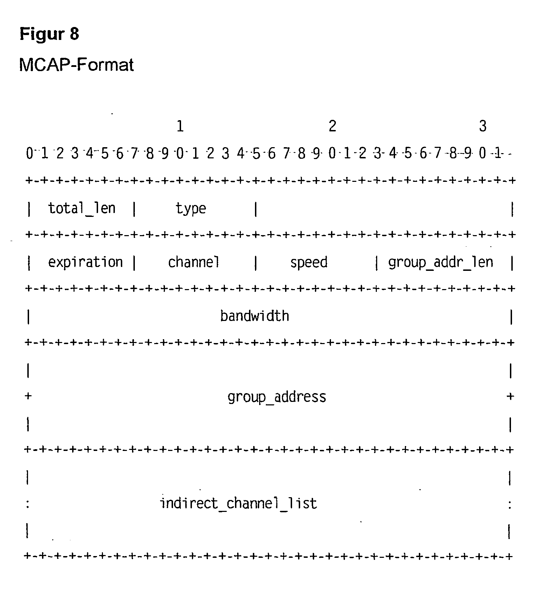

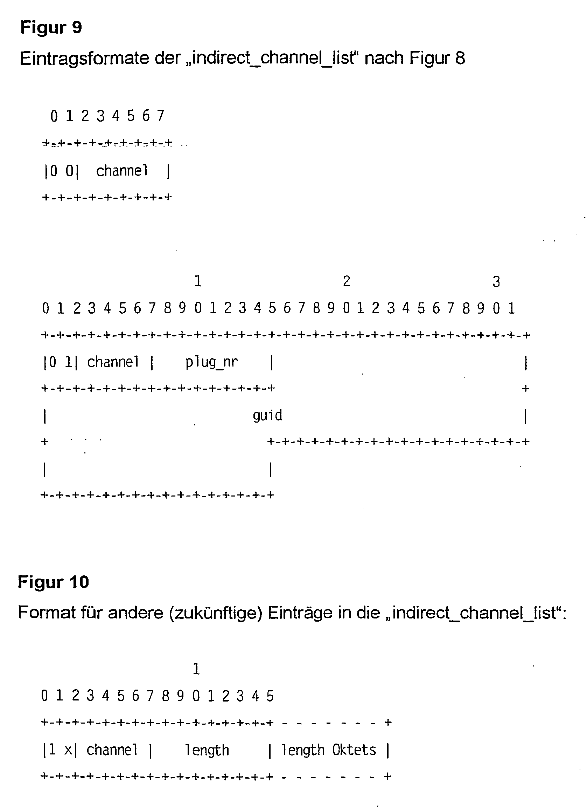

Im aktuellen IPover1394-Standard ist die Verwendung eines anderen als des Default-Broadcast-Kanals mittels MCAP-Meldungen anzuzeigen. Im Hinblick auf die sonst benötigte Rechenleistung sollte Entsprechendes auch bei der Verwendung von Übersetzungsprogrammen und unter Einschluß der von diesen indirekt referenzierten 1394-Kanäle geschehen. Die Unterscheidung zu bisherigen MCAP-Meldungen kann über das "opcode"-Feld der Meldung selbst oder über das "type"-Feld des einzelnen, geeignet erweiterten MCAP-groupaddress-descriptors erfolgen. Zusätzlich zu den bisherigen Information ist dabei jeder indirekt referenzierte Kanal, ggf. die für diesen Kanal benötigte Speichertiefe, sowie im Falle von 1394.1 Netzwerken sinnvollerweise auch GUID und Plug-Nr. der zugehörigen Quelle, anzugeben. Speziell kann hierfür das Format nach Figur 8 verwendet werden. Dort bezeichnet total_len die Gesamtlänge des Deskriptors, channel, speed und bandwidth beziehen sich auf den zur Übertragung der Übersetzungsprogramme verwendeten Kanal, in dem bisher reservierten Feld group_addr_len ist die Länge in Oktets der group_address selbst angegeben. Die unmittelbar folgende Liste der indirekt referenzierten Kanäle besteht z.B. aus Einträgen nach Figur 9.Für zukünftige Erweiterungen wird das Format nach Figur 10 reserviert. Nachfolgend werden weitere Details der Erfindung bei einer Anwendung auf IPv4-Netzwerke beschrieben.

Es werden sämtliche an der Umsetzung beteiligten Pakete der Nutzdatenströme durch eine spezielle IP-Header-Option mit Längenangabe gekennzeichnet. Das eigentliche Übersetzungsprogramm kann entweder innerhalb eines Nutzdatenstroms oder aber über eine weitere dedizierte (z.B. IP-) Verbindung übertragen werden. Zur Rekonstruktion der Sendereihenfolge wird von jedem (logischen) Sender eine für alle von ihm ausgehenden Nutzdatenströme gemeinsame Sequenznummernfolge übertragen. Um unterschiedliche Paketraten für verschiedene Nutzdatenströme zu ermöglichen, können innerhalb eines Nutzdatenstroms auch Sequenznummern übersprungen werden. Um auch in diesem Fall fehlende Pakete erkennen zu können, wird dann neben der Sequenznummer des Paketes zusätzlich die Sequenznummer des vorhergehenden (oder in einer alternativen Implementierung - hierbei ergeben sich allerdings evtl. Kausalitätsprobleme auf Senderseite -des nächsten) Paketes übertragen. Wesentlich hierbei ist, daß dieselbe Sequenznummer in Paketen verschiedener Nutzdatenströme auftreten kann, wodurch sich gegenüber einer eindeutigen Sequenznummer über alle Nutzdatenströme hinweg bei vorgegebener Bitanzahl die Dauer für einen kompletten Durchlauf der Sequenznummernfolge erhöht. Weist man den Nutzdatenströmen selbst eine geeignete zyklische Reihenfolge zu, so kann - soweit notwendig - sogar zwischen verschiedenen Nutzdatenströmen die genaue Sendereihenfolge rekonstruiert werden, wenn man die gemeinsame Sequenznummer immer dann erhöht, wenn dieser Zyklus, ggf. unter Überspringen einzelner Nutzdatenströme, vollständig durchlaufen wurde.

Wird das Übersetzungsprogramm über eine eigene, dedizierte Verbindung übertragen, so werden auch in die Übersetzungsprogrammpakete entsprechende Sequenznummern aufgenommen.

Empfängerseitig werden die einzelnen Nutzdatenpakete entsprechend der Sequenznummer in, ggf. getrennte, FIFO-Speicher vorgegebener oder aber anderweitig, z.B. beim Verbindungsaufbau, konfigurierbarer Größe aufgenommen. Entsprechendes gilt für die Übersetzungsprogrammfragmente. Wurden bis zum vollständigen Durchlauf des entsprechenden Übersetzungsprogrammfragments nicht sämtliche von diesem referenzierten Nutzdatenpakete empfangen bzw. haben einzelne referenzierte Nutzdatenfragmente vor dem Empfang des Übersetzungsprogrammfragments den FIFO bereits wieder verlassen, so wird das entsprechende, somit noch unvollständige, resultierende Paket als fehlerhaft empfangen gewertet.

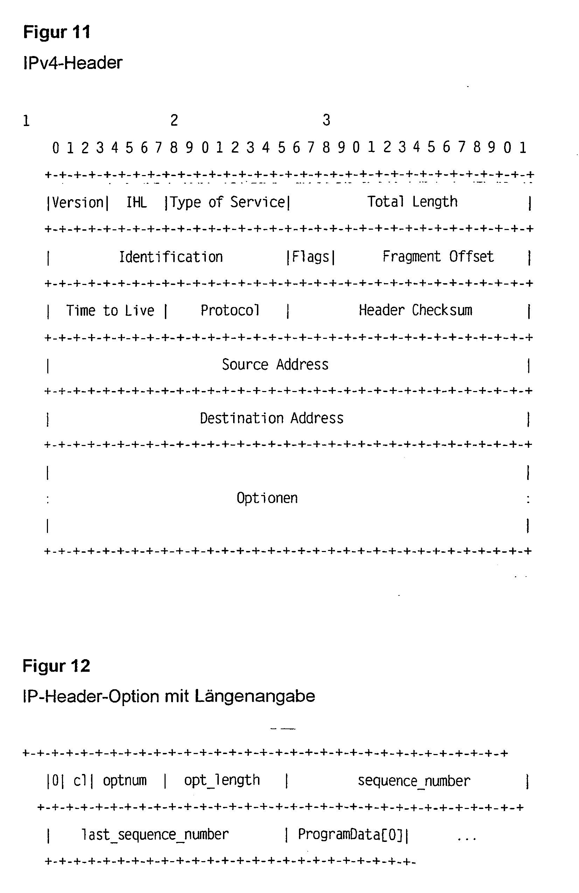

Zur Übertragung der Sequenznummern bzw. der Übersetzungsprogramme innerhalb eines Nutzdatenstroms wird innerhalb des IP-Headers eine neue IP-Header-Option definiert (vgl. Figuren 11,12); Die Options-Nummer "optnum" unterscheidet sich dabei von allen bisher verwendeten Optionsnummern. Alternativ kann die Unterscheidung auch über die Optionsklasse "cl" erfolgen; optnum und cl können auch zur Unterscheidung verschiedener Übersetzungsprogrammformate verwendet werden. Der eigentliche Inhalt der Option besteht aus einer zyklischen Sequenznummer "sequence_number" zur Rekonstruktion der Sendereihenfolge, ggf. gefolgt von der Sequenznummer des vorherigen Paketes, sowie zumindest dem Beginn des Übersetzungsprogramms. Durch Sprungbefehle kann aus dem IP-Header zu einer beliebigen anderen Stelle innerhalb des Paketes verzweigt werden. Die Ablage von Teilen des Übersetzungsprogramms auch außerhalb des IP-Headers kann deshalb notwendig sein, da die Gesamtlänge des Headers auf 15 32-bit Worte beschränkt ist. Um in diesem Fall Kompatibilität mit Empfängern wie dem Gerät 4 in der Figur 1 zu erzielen, ist hierzu ein geeigneter Platz innerhalb höherer Protokollebenen zu finden, der von derartigen Geräten ignoriert wird. Typischerweise wird man hierzu in den verschiedene IP-Protokollen bereits vorgesehene Erweiterungsmöglichkeiten nutzen. In jedem Fall wird durch die Verwendung der neuen Option innerhalb des IP-Headers selbst sichergestellt, daß die empfängerseitigen Übersetzungseinheiten selbst nur auf IP-Ebene arbeiten und daher auch bei Einführung neuer Formate auf höheren Protokollebenen nicht verändert werden müssen.

Im folgenden wird ein möglicher Übersetzungsprogrammbefehlssatz beschrieben:

Das eigentliche Übersetzungsprogramm kann speziell wieder aus einer beliebigen Abfolge der folgenden Befehle bestehen.

### NOP

Dieser Befehl hat keine Wirkung und dient insbesondere dazu, um nachfolgende Befehle ggf. geeignet auf Wortgrenzen auszurichten.

### ADD add

Dieser Befehl verlängert die Länge des nächsten CPY-Befehls innerhalb des aktuellen Übersetzungsprogrammpaketes um "add" Oktets:

### STREAM id

Hierdurch wird der Nutzdatenstrom mit Index "id" für weitere Kopieraktionen ausgewählt.

### JR offset

Überspringe die nächsten "offset" Oktets im Übersetzungsprogramm. "offset" ist vorzeichenbehaftet z.B. im 2er-Komplement zu kodieren. Bezeichnet "I" die Länge des JR-Befehls in Oktets, so wird JR(-I) als Ende des Übersetzungsprogramms interpretiert. Die JR(O) sind grundsätzlich der entsprechenden Anzahl NOP-Befehlen äquivalent,können jedoch in einer speziellen Implementierung auch für andere Zwecke umdefiniert werden.

### PACKET offset

Wähle für nachfolgende Kopieroperationen das entsprechend der Sequenznummer vorhergehende Paket im Abstand "offset" aus.

### CPYIM s

Füge an das aktuell zu bildende Paket 4s, sowie ggf. die durch einen seit dem letzten CPY oder CPYIM-Befehls bearbeiteten ADD-Befehl zusätzlich spezifiziert Anzahl Oktets an.

### CPY start, size

Füge, beginnend mit dem durch "start" bezeichneten Oktet im aktuellen Quellpaket, an das aktuell zu bildende Paket 4s, sowie ggf. die durch einen seit dem letzten CPY oder CPYIM-Befehls bearbeiteten ADD-Befehl zusätzlich spezifiziert Anzahl Oktets an.

### CPY STOP start,size

Wie CPY, jedoch beende gleichzeitig das Übersetzungsprogramm

### SEND ...

Sende das aktuelle Paket. Die genaue Länge und Bedeutung des Befehls ist vom jeweiligen Zielprotokoll abhängig.

### SEND STOP

Wie SEND, jedoch beende gleichzeitig das Übersetzungsprogramm

Im folgenden wird eine.Emulation isochroner und asynchroner 1394-Kanäle in IP-Netzwerken beschrieben:

Insbesondere über isochrone reale 1394-Kanäle werden im CE-Bereich typischerweise AV-Nutzdatenströme übertragen. Im IP-Bereich sind für ähnliche Anwendungen, zumindest soweit mehrere Empfänger mit dem selben Nutzdatenstrom versorgt werden sollen, Multicast-Adressen einsetzbar. Es bietet sich daher an, jedem 1394-Kanal eine ggf. dynamisch konfigurierbare Multicastadresse bzw. Multicastadresse/Port-Kombination zuzuordnen. Als Datenformat kann dann z.B. ein dem tatsächlichen Nutzdatenstrom entsprechendes RTP-Format verwendet werden. Zusätzlich wird für die Koordination der einzelnen emulierten 1394-Knoten eine weitere Multicastadresse/Port-Kombination (im folgenden mit Steuerkanal bezeichnet) verwendet. Die folgende Darstellung beschränkt sich auf den Fall, daß die Übersetzungsprogramme aus Sicht der Übersetzungseinheiten innerhalb eines Nutzdatenstromes übertragen werden.

Eine Koordination der Zuordnung von Übersetzungsprogrammen und Nutzdaten geschieht wie folgt:

Über den Steuerkanal gibt jeder Sender in regelmäßigen Abständen für die von ihm genutzten 1394-Kanäle IP-Addresse und Port zum Empfang des zugehörigen Übersetzungsprogramms sowie ggf. zusätzlicher von diesem referenzierter Nutzdatenkanäle bekannt. Diese Kanalkonfigurationsmeldungen beinhalten auch Informationen über die zur Dekodierung mindestens erforderlichen FIFO-Größen. Empfänger können über eine entsprechende Konfigurationsanfrage über den Steuerkanal die Aussendung einer Kanalkonfigurationsmeldung für einen speziellen 1394-Kanal direkt anstoßen und dabei gleichzeitig die von ihnen maximal für diesen Kanal verfügbare FIFO-Größen mitteilen. Sind diese kleiner als vom Sender derzeit beansprucht, so wird dieser versuchen, die Kodierung entsprechend der kleineren FIFO-Größen anzupassen. Ist dies aufgrund fehlender Bandbreite auf IP-Ebene nicht möglich, so initiert der Sender einen emulierten 1394-BUS-Reset und sorgt beim nachfolgenden Wiederaufbau der Verbindung dafür; daß dieser wegen zu geringer Bandbreite scheitert.

Bei den vom Sender mitgeteilten FIFO-Größen wird vorausgesetzt, daß die IP-Pakete vom jeweiligen Empfänger in der ursprünglichen Sendereihenfolge empfangen werden und von diesem jeweils das gesamte defragmentierte IP-Paket gespeichert wird. Daher ist von den Empfängern bei der Berechnung der zulässigen FIFO-Größen innerhalb von Konfigurationsanfragen zusätzlich der ggf. notwendige Speicher zur Wiederherstellung der Sendereihenfolge zu berücksichtigen. Durch entsprechende Konfigurationsanfragen ist damit auch eine adaptive Regelung bei Veränderung der IP-Übertragungsqualität möglich.

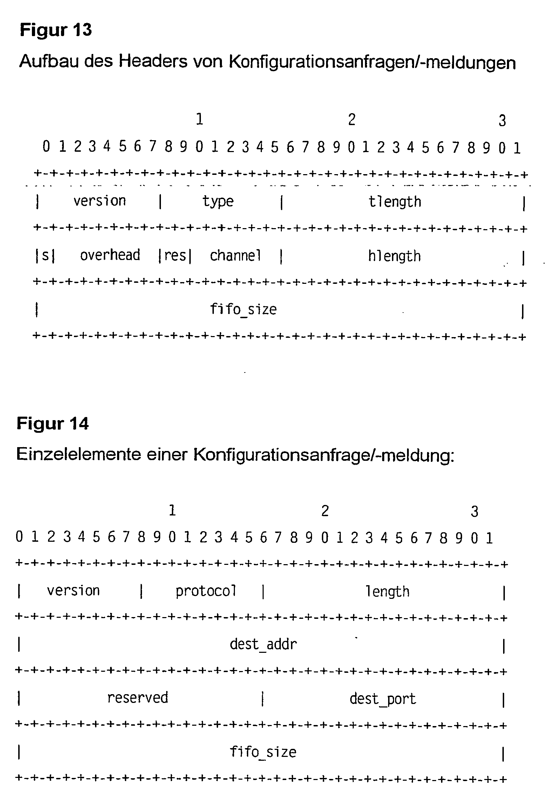

Möglicher Aufbau der Konfigurationsanfragen/-meldungen:
a) Header: (vgl. Figur 13)
   Version: Formatversion (hier 0)
   nicht abwärtskompatible Meldungsformate erhalten eine neue
   Versionsnummer.
   - t:: Pakettyp:
   0: Konfigurationsmeldung
   1: Konfigurationsanfrage
      >=2: reserviert für zukünftige Erweiterungen
   - tlength:: Gesamtlänge dieser Konfigurationsmeldung/-anfrage in Oktets. hlength: Headerlänge in Oktets (hier 12 oder speziell für fifo_size=0 auch 8)
   - res:: reserviert für zukünftige Erweiterungen
   fifo_size:notwendige (Konfigurationsmeldung) bzw.
   maximal zulässige(Konfigurationsanfrage) gemeinsame FIFO-Größe für IP Datenströme.
   - s:: Nur in Konfigurationsanfragen:
   0: Abspaltung weiterer Einzel-FIFOs unzulässig
   1: Abspaltung weiterer Einzel-FIFOs zulässig
      overhead: Pro abgespaltenem Einzel-FIFO sind zusätzlich zu dessen Größe von fifo_size overhead Oktets für Verwaltungsinformationen abzuziehen.
   Innerhalb eines IP-Paketes können auch Meldungen und Anfragen für verschiedene Kanäle hintereinander übertragen werden.
b) auf den Header folgt ggf. die Liste der diesem Kanal zugeordneten IP-Datenströme. Jedes Element dieser Liste hat das Format nach Figur 14:
   - version:: Formatversion
   nicht abwärtskompatible Meldungsformate erhalten eine neue Versionsnummer.
   - protocol:: IP-Protokollnummer
   - length:: Länge dieses Listenelements (hier 12 oder 16)
   - dest_addr:: IP-Zieladresse
   dest_port: IP-Port (soweit vom entsprechenden IP-Protokoll unterstützt)
   - fifo_size:: notwendige (Konfigurationsmeldung) bzw. maximal zulässige (Konfigurationsanfrage) zusätzliche FIFO-Größe für diesen IP-Datenstrom.

Zusätzliche Übersetzungsbefehle, wie die Befehle SEND und SEND_STOP werden wie folgt definiert:

### SEND second count cycle count

Betrachte das gerade zusammengestellte Paket als asynchrones (a=1) oder isochrones (a=0) Paket, das im, bzw. nicht vor dem vorausgehenden isochronen 1394-Zyklus "[second_count,cycle_count]" übertragen wurde. "[second_count,cycle_count]" entspricht den höchstwertigen 20 bit des 1394-CYCLE-COUNT Registers.

### SEND STOP second count cycle count

### Wie SEND ..., jedoch beende gleichzeitig das Übersetzungsprogramm

Eine Übertragung des Übersetzungsprogramms bei Verwendung des RTP-Transportprotokolls geschieht wie folgt:

In der Spezifikation des RTP-Transportprotokolls ist festgelegt, dass dem eigentlichen RTP-Header optional eine sogenannte "Header Extension" folgen kann. Hierzu wird auf Schulzrinne, u. a.: A Transport Protocol for Real-Time Applications, Januar 1996 (RFC 1889) verwiesen. Diese "Header Extension" soll von RTP-Implementierungen, die diese nicht unterstützen, ignoriert werden. Insbesondere sofern im IP-Header nicht ausreichend Platz für das komplette Übersetzungsprogrammpaket ist, kann dieses daher in Form einer RTP Header Extension übertragen werden.

### Bezugszeichenliste:

- 1: Netzwerk
- 2: Hilfsnetzwerk
- 3: Sender
- 3a: Mittel zur Generierung eines dem 1. Netzwerkprotokoll entsprechenden Datenstroms
- 3b: Mittel zum Erzeugen von Übersetzungsvorschriften entsprechenden Daten
- 3c: Überprüfungseinheit
- 4: Empfänger, der 1. Netzwerkprotokoll unterstützt
- 5: Empfänger, der 2. Netzwerkprotokoll unterstützt
- 6: Übersetzungseinheit
- 7: Übersetzungseinheit
- 8: Empfänger, der 2. Netzwerkprotokoll unterstützt
- 9: Empfänger, der 2. Netzwerkprotokoll unterstützt
- 10: Empfänger, der 3. Netzwerkprotokoll unterstützt

## Patentansprüche

1. Anordnung zur Übertragung eines Steuerdaten und Nutzdaten enthaltenden Datenstroms, welche aufweist:
- mindestens einen Sender,
- ein Netzwerk mit einem ersten Netzwerkprotokoll, welches zwischen dem Sender und möglichen Empfängern vorgesehen ist, und
- einen oder mehrere daran direkt oder indirekt angeschlossene Empfänger, von denen wenigstens einer statt des ersten ein zweites Netzwerkprotokoll unterstützt,
wobei
- der Sender (3) Mittel (3a) zur Generierung eines dem ersten Netzwerkprotokoll entsprechenden Datenstroms sowie Mittel (3b) zur Erzeugung von Zusatzinformationen aufweist, die er an empfängerseitige Übersetzungseinheiten (6,7) weiterleitet,
**dadurch gekennzeichnet, dass**
wenigstens einer der Empfänger, die die statt des ersten ein zweites Netzwerkprotokoll unterstützen (5, 8, 9), eine vorgeschaltete oder integrierte Übersetzungseinheit (7, 6) aufweist, die die gemäß dem ersten Netzwerkprotokoll übertragenen Daten in Verbindung mit den Zusatzinformationen in Daten umwandelt, die dem zweiten Netzwerkprotokoll entsprechen, wobei die durch Mittel (3b) des Senders (3) eingesetzten Zusatzinformationen ganz oder teilweise Übersetzungsprogramme oder -programmteile sind.

2. Anordnung nach Anspruch 1,
**dadurch gekennzeichnet, dass**
durch Mittel (3b) des Senders (3) erzeugten Zusatzinformationen in den Datenstrom eingebettet werden.

3. Anordnung nach Anspruch 1 oder 2,
**dadurch gekennzeichnet, dass**
durch Mittel (3b) des Senders (3) eingesetzen Zusatzinformationen ganz oder teilweise über mindestens ein weiteres logisch oder physikalisch getrenntes Netzwerk zu den empfängerseitigen Übersetzungseinheiten weitergeleitet werden.

4. Anordnung nach Anspruch 3,
**dadurch gekennzeichnet, dass**
die Verteilung der von Mittel (3b) des Senders (3) erzeugten Zusatzinformationen des Senders auf die weiteren Netzwerke aufgrund der empfängerseitigen Nutzdatenprotokolle erfolgt, für die sie benötigt werden.

5. Anordnung nach einem der vorhergehenden Ansprüche,
**dadurch gekennzeichnet, dass**
die Übersetzungseinheit (7) mit dem zweiten Empfänger (8) über wenigstens ein Hilfsnetzwerk (2) verbunden ist.

6. Anordnung nach Anspruch 5,
**dadurch gekennzeichnet, dass**
an das Hilfsnetzwerk (2) wenigstens ein weiterer Empfänger (9) angeschlossen ist, der ebenfalls das zweite Netzwerkprotokoll unterstützt.

7. Anordnung nach einem der Ansprüche 5 oder 6,
**dadurch gekennzeichnet, dass**
die Übersetzungseinheit (7) über dasselbe oder ein weiteres Hilfsnetzwerk (2) mit wenigstens einem weiteren Empfänger (10) verbunden ist, der ein drittes oder weiteres Netzwerkprotokoll unterstützt und die Übersetzungseinheit (7) unter Verwendung der Zusatzinformationen den Nutzdatenstrom in Daten umwandelt, die diesem dritten oder weiteren Netzwerkprotokoll entsprechen.

8. Anordnung nach einem der vorhergehenden Ansprüche,
**dadurch gekennzeichnet, dass**
der Sender (3) eine Überprüfungseinheit (3c) aufweist, die zu einer Überprüfung vorgesehen ist, ob eine Übertragung eines Übersetzungsvorschriften enthaltenden Datenstroms mehr Übertragungsbandbreite benötigt als eine Übertragung des Datenstroms gemäß mehrerer Netzwerkprotokolle, und dass der Sender (3) denjenigen Datenstrom überträgt, der die geringere Übertragungsbandbreite benötigt.

9. Anordnung nach Anspruch 8,
**dadurch gekennzeichnet, dass**
die Überprüfung für ein einzelnes Datenpaket, für eine Gruppe von Datenpaketen oder für den gesamten Nutzdatenstrom erfolgt.

10. Anordnung nach einem der vorhergehenden Ansprüche,
**dadurch gekennzeichnet, dass**
der Sender (3) eine Überprüfungseinheit (3c) aufweist, die zu einer Überprüfung vorgesehen ist, inwieweit geeignete Übersetzungseinheiten den an das Netzwerk (1) angeschlossenen Empfängern, die nur das zweite Netzwerkprotokoll unterstützen, vorgeschaltet oder in diese integriert sind, und der Sender (3) nur insoweit Übersetzungsvorschriften oder Übersetzungsprogramme einem Nutzdatenstrom hinzufügt, als alle Empfänger bzw. vorgeschaltete Übersetzungseinheiten, für die dieser Nutzdatenstrom bestimmt ist, mit Hilfe dieser Übersetzungsvorschriften bzw. -programme diesen Nutzdatenstrom in das zweite Netzwerkprotokoll überführen können.

11. Anordnung nach Anspruch 10,
**dadurch gekennzeichnet, dass**
wenigstens ein Teil der Empfänger und/oder Übersetzungseinheiten jeweils zur Übertragung von Daten zum Sender vorgesehen sind, die Informationen über die jeweils unterstützten Netzwerkprotokolle und/oder die Möglichkeit und den Umfang zur Verarbeitung von Übersetzungsvorschriften bzw.-programmen enthalten.

12. Anordnung nach einem der Ansprüche 1 bis 11, wobei der genannte Sender Mittel (3a, 3b) aufweist
- zur Generierung eines einem ersten Netzwerkprotokoll entsprechenden Datenstroms, und
- zur Erzeugung von Übersetzungsvorschriften entsprechenden Daten in den Datenstrom, wobei die Übersetzungsvorschriften zu einer Umwandlung von dem ersten Netzwerkprotokoll entsprechenden Daten in einem zweiten Netzwerkprotokoll entsprechende Daten vorgesehen sind.

13. Anordnung nach Anspruch 12,
**dadurch gekennzeichnet, dass**
die durch Mittel (3b) erzeugten Zusatzinformationen in den Datenstrom eingefügt werden.

14. Anordnung nach Anspruch 12 oder 13,
**dadurch gekennzeichnet, dass**
die durch Mittel (3b) erzeugten Zusatzinformationen ganz oder teilweise an mindestens einen weiteren logischen oder physikalischen Netzwerkanschluss weitergeleitet werden.

15. Anordnung nach Anspruch 14,
**dadurch gekennzeichnet, dass**
die Verteilung der von Mittel (3b) des Senders (3) erzeugten Zusatzinformationen des Senders auf die weiteren Netzwerkanschlüsse aufgrund der empfängerseitigen Nutzdatenprotokolle erfolgt, für die sie benötigt werden.

16. Anordnung nach einem der Ansprüche 12 bis 15,
**dadurch gekennzeichnet, dass**
die durch Mittel (3b) eingesetzten Zusatzinformationen ganz oder teilweise einem Übersetzungsprogramm oder -programmteil entsprechende Daten darstellen.

17. Anordnung nach einem der Anspruch 12 bis 16,
**dadurch gekennzeichnet, dass**
er eine Überprüfungseinheit (3c) aufweist, die zu einer Überprüfung vorgesehen ist, ob eine Übertragung eines die Übersetzungsvorschriften enthaltenden Datenstroms mehr Übertragungsbandbreite benötigt als eine Übertragung des Datenstroms gemäß mehrerer Netzwerkprotokolle, und dass er denjenigen Datenstrom überträgt, der die geringere Übertragungsbandbreite benötigt.

18. Anordnung nach Anspruch 17,
**dadurch gekennzeichnet, dass**
er die Überprüfung für ein einzelnes Datenpaket, für eine Gruppe von Datenpaketen oder für den gesamten Nutzdatenstrom vornimmt.

19. Anordnung nach einem der Ansprüche 12 - 18,
**dadurch gekennzeichnet, dass**
er eine Überprüfungseinheit (3c) aufweist, die zu einer Überprüfung vorgesehen ist, inwieweit geeignete Übersetzungseinheiten den an das Netzwerk (1) angeschlossenen Empfängern, die nur das zweite Netzwerkprotokoll unterstützen, vorgeschaltet oder in diese integriert sind, und der Sender (3) nur insoweit Übersetzungsvorschriften oder Übersetzungsprogramme einem Nutzdatenstrom hinzufügt, als alle Empfänger bzw. vorgeschaltete Übersetzungseinheiten, für die dieser Nutzdatenstrom bestimmt ist, mit Hilfe dieser Übersetzungsvorschriften bzw. -programme diesen Nutzdatenstrom in das zweite Netzwerkprotokoll überführen können.

20. Anordnung nach einem der Ansprüche 1 bis 11,
**dadurch gekennzeichnet, dass**
die Übersetzungseinheiten gemäß einem ersten Netzwerkprotokoll übertragene Nutzdaten unter Verwendung von Zusatzinformationen in Daten umwandelt, die anderen Netzwerkprotokollen entsprechen.

21. Anordnung nach Anspruch 20,
**dadurch gekennzeichnet, dass**
die Zusatzinformationen von einem Netzwerk gemeinsam mit den gemäß einem ersten Netzwerkprotokoll übertragene Nutzdaten empfangen werden.

22. Anordnung nach Anspruch 20 oder 21,
**dadurch gekennzeichnet, dass**
die Zusatzinformationen von zumindest teilweise auch von wenigstens einem weiteren logischen oder physikalischen Netzwerk empfangen werden.

23. Anordnung nach Anspruch 22,
**dadurch gekennzeichnet, dass**
die Zusatzinformationen wenigstens teilweise getrennt nach den Netzwerkprotokollen empfangen werden, für die sie bei der Umwandlung des Nutzdatenstroms benötigt werden.

24. Anordnung nach einem der Ansprüche 20 bis 23
**dadurch gekennzeichnet, dass**
diese die Zusatzinformationen ganz oder teilweise als Übersetzungsvorschriften oder Übersetzungsprogramme bzw. - programmteile interpretieren.

25. Anordnung nach einem der Ansprüchen 20 bis 24,
**dadurch gekennzeichnet, dass**
diese Informationen über sich aussenden, die zur Verwendung in Überprüfungseinheiten nach Anspruch 18 bestimmt sind.

26. Anordnung nach einem der Ansprüche 1 bis 11,
**dadurch gekennzeichnet, dass**
der Empfänger in die Übersetzungseinheiten nach einem der Ansprüchen 20-25 integriert ist.

## Claims

1. Arrangement for transferring a data stream containing control data and message data, said arrangement having:
- at least one transmitter,
- a network with a first network protocol, which network is provided between the transmitter and possible receivers, and
- one or more receivers connected directly or indirectly to said network, of which said receiver(s) at least one supports a second network protocol instead of the first one,
wherein
- the transmitter (3) has means (3a) for generating a data stream corresponding to the first network protocol, as well as means (3b) for producing additional information which is forwarded by said transmitter (3) to translation units (6, 7) on the receiver side,
**characterized in that**
at least one of the receivers (5, 8, 9) which support a second network protocol instead of the first one has a preconnected or integrated translation unit (7, 6) which converts the data transferred according to the first network protocol, in combination with the additional information, into data which correspond to the second network protocol, the additional information entered by means (3b) of the transmitter (3) being, entirely or partially, translation programs or translation program parts.

2. Arrangement according to claim 1,
**characterized in that**
additional information produced by means (3b) of the transmitter (3) is embedded into the data stream.

3. Arrangement according to either of claims 1 or 2,
**characterized in that**
additional information entered by means (3b) of the transmitter (3) is forwarded entirely or partially through at least one further logically or physically separated network to the receiver-side translation units.

4. Arrangement according to claim 3,
**characterized in that**
the distribution, to the further networks, of the additional information of the transmitter produced by means (3b) of the transmitter (3) is effected on the basis of the receiver-side message data protocols for which said additional information is required.

5. Arrangement according to any one of the preceding claims,
**characterized in that**
the translation unit (7) is connected to the second receiver (8) through at least one auxiliary network (2).

6. Arrangement according to claim 5,
**characterized in that**
at least one further receiver (9), which also supports the second network protocol, is connected to the auxiliary network (2).

7. Arrangement according to either of claims 5 or 6,
**characterized in that**
the translation unit (7) is connected through the same or a further auxiliary network (2) to at least one further receiver (10) which supports a third or a further network protocol, and the translation unit (7), using the additional information, converts the message data stream into data corresponding to said third or further network protocol.

8. Arrangement according to any one of the preceding claims,
**characterized in that**
the transmitter (3) has a checking unit (3c) which is provided for checking whether transfer of a data stream containing translation specifications requires more transfer bandwidth than transfer of the data stream according to a plurality of network protocols, and the transmitter (3) transfers that data stream which requires the lesser transfer bandwidth.

9. Arrangement according to claim 8,
**characterized in that**
the checking is effected for an individual data packet, for a group of data packets or for the entire message data stream.

10. Arrangement according to any one of the preceding claims,
**characterized in that**
the transmitter (3) has a checking unit (3c) which is provided to check the extent to which suitable translation units are connected before or are integrated into the receivers that are connected to the network (1) and support only the second network protocol, and the transmitter (3) adds translation specifications or translation programs to a message data stream only if all receivers or preconnected translation units for which said message data stream is intended can transfer said message data stream into the second network protocol with the aid of said translation specifications or translation programs.

11. Arrangement according to claim 10,
**characterized in that**
at least some of the receivers and/or translation units are in each case provided for transferring data to the transmitter, which data contain information about the respectively supported network protocols and/or about the possibility and the scope for processing translation specifications or translation programs.

12. Arrangement according to any one of claims 1 to 11, wherein the said transmitter has means (3a, 3b)
- for generating a data stream corresponding to a first network protocol, and
- for producing in the data stream data corresponding to translation specifications, the translation specifications being provided for conversion of data corresponding to the first network protocol into data corresponding to a second network protocol.

13. Arrangement according to claim 12,
**characterized in that**
the additional information produced by means (3b) is inserted into the data stream.

14. Arrangement according to either of claims 12 or 13,
**characterized in that**
the additional information produced by means (3b) is forwarded entirely or partially to at least one further logical or physical network connection.

15. Arrangement according to claim 14,
**characterized in that**
the distribution, to the further network connections, of the additional information of the transmitter produced by means (3b) of the transmitter (3) is effected on the basis of the receiver-side message data protocols for which said additional information is required.

16. Arrangement according to any one of claims 12 to 15,
**characterized in that**
the additional information entered by means (3b) constitutes entirely or partially data corresponding to a translation program or translation program part.

17. Arrangement according to any one of claims 12 to 16,
**characterized in that**
said arrangement has a checking unit (3c) which is provided to check whether transfer of a data stream containing the translation specifications requires more transfer bandwidth than transfer of the data stream according to a plurality of network protocols, and said arrangement transmits that data stream which requires the lesser transfer bandwidth.

18. Arrangement according to claim 17,
**characterized in that**
it performs the checking for an individual data packet, for a group of data packets, or for the entire message data stream.

19. Arrangement according to any one of claims 12 to 18,
**characterized in that**
it has a checking unit (3c) which is provided to check the extent to which suitable translation units are connected before or are integrated into the receivers that are connected to the network (1) and support only the second network protocol, and the transmitter (3) adds translation specifications or translation programs to a message data stream only if all receivers or preconnected translation units for which said message data stream is intended can transfer said message data stream into the second network protocol with the aid of said translation specifications or translation programs.

20. Arrangement according to any one of claims 1 to 11,
**characterized in that**
the translation units, using additional information, convert message data transferred according to a first network protocol into data corresponding to other network protocols.

21. Arrangement according to claim 20,
**characterized in that**
a network receives the additional information together with the message data transferred according to a first network protocol.

22. Arrangement according to either of claims 20 or 21,
**characterized in that**
the additional information is also received at least partially by at least one further logical or physical network.

23. Arrangement according to claim 22,
**characterized in that**
the additional information is received at least partially separated according to the network protocols for which it is required in the conversion of the message data stream.

24. Arrangement according to any one of claims 20 to 23,
**characterized in that**
said interpret the additional information entirely or partially as translation specifications or translation programs or translation program parts.

25. Arrangement according to any one of claims 20 to 24,
**characterized in that**
said send out information about themselves which is intended for use in checking units according to claim 18.

26. Arrangement according to nay one of claims 1 to 11,
**characterized in that**
the receiver is integrated into the translation units according to any one of claims 20 to 25.

## Revendications

1. Dispositif de transmission d'un flux de données contenant des données de commande et des données utiles, qui présente :
- au moins un émetteur,
- un réseau avec un premier protocole de réseau, qui est prévu entre l'émetteur et des destinataires possibles, et
- un ou plusieurs destinataires reliés directement ou indirectement, dont au moins un d'eux prend en charge un second protocole de réseau au lieu du premier,
dans lequel
- l'émetteur (3) présente des moyens (3a) pour générer un flux de données correspondant au premier protocole de réseau ainsi que des moyens (3b) pour générer des informations supplémentaires, qu'il transmet à des unités de traduction côté destinataires (6, 7),
**caractérisé en ce que**
au moins un des destinataires, qui prennent en charge (5, 8, 9) un second protocole de réseau au lieu du premier, présente une unité de traduction placée en amont ou intégrée (7, 6), qui convertit les données transmises selon le premier protocole de réseau en données en liaison avec les informations supplémentaires, qui correspondent au second protocole de réseau, où les informations supplémentaires introduites par les moyens (3b) de l'émetteur (3) sont des programmes ou des parties de programme de traduction entiers ou partiels.

2. Dispositif selon la revendication 1, **caractérisé en ce que** les informations supplémentaires générées par les moyens (3b) de l'émetteur (3) sont comprises dans le flux de données.

3. Dispositif selon la revendication 1 ou 2, **caractérisé en ce que** les informations supplémentaires introduites par les moyens (3b) de l'émetteur (3) sont transmises entièrement ou partiellement par l'intermédiaire d'au moins un autre réseau distinct logique ou physique aux unités de traduction côté destinataires.

4. Dispositif selon la revendication 3, **caractérisé en ce que** la répartition des informations supplémentaires de l'émetteur générées par les moyens (3b) de l'émetteur (3) se produit sur les autres réseaux en raison des protocoles de données utiles côté destinataires, pour lesquels elles sont nécessaires.

5. Dispositif selon l'une des revendications précédentes, **caractérisé en ce que** l'unité de traduction (7) est reliée au second destinataire (8) par l'intermédiaire d'au moins un réseau auxiliaire (2).

6. Dispositif selon la revendication 5, **caractérisé en ce que** au moins un autre destinataire (9), qui prend en charge également le second protocole de réseau, est relié au réseau auxiliaire (2).

7. Dispositif selon l'une des revendications 5 ou 6, **caractérisé en ce que** l'unité de traduction (7) est reliée par l'intermédiaire du même ou d'un autre réseau auxiliaire (2) à au moins un autre destinataire (10), qui prend en charge un troisième ou un autre protocole de réseau et l'unité de traduction (7) convertit, en utilisant les informations supplémentaires, le flux de données utiles en données, qui correspondent à ce troisième ou autre protocole de réseau.

8. Dispositif selon l'une des revendications précédentes, **caractérisé en ce que** l'émetteur (3) présente une unité d'évaluation (3c), qui est prévue pour une évaluation, si une transmission d'un flux de données contenant les directives de traduction nécessite plus de largeur de bande de transmission qu'une transmission du flux de données selon plusieurs protocoles de réseau, et **en ce que** l'émetteur (3) transmet ce flux de données, qui nécessite la largeur de bande de transmission plus étroite.

9. Dispositif selon la revendication 8, **caractérisé en ce que** l'évaluation est effectuée pour un paquet de données individuel, pour un groupe de paquets de données ou pour l'ensemble du flux de données utiles.

10. Dispositif selon l'une des revendications précédentes, **caractérisé en ce que** l'émetteur (3) présente une unité d'évaluation (3c), qui est prévue pour une évaluation dans quelle mesure des unités de traduction appropriées sont placées en amont des destinataires reliés au réseau (1), qui prennent en charge uniquement le second protocole de réseau, ou sont intégrées dans celui-ci, et l'émetteur (3) ajoute les directives de traduction ou les programmes de traduction à un flux de données utiles, dans la mesure où tous les destinataires ou les unités de traduction placées en amont, pour lesquels ce flux de données utiles est déterminé, peuvent transférer ce flux de données utiles dans le second protocole de réseau à l'aide de ces directives ou programmes de traduction.

11. Dispositif selon la revendication 10, **caractérisé en ce qu'**au moins une partie des destinataires et/ou des unités de traduction sont prévus respectivement pour la transmission des données à l'émetteur, qui contiennent les informations concernant les protocoles de réseaux pris en charge respectivement et/ou la possibilité et l'importance en vue du traitement par les directives ou les programmes de traduction.

12. Dispositif selon l'une des revendications 1 à 11, dans laquelle le dit émetteur présente des moyens (3a, 3b)
- pour générer un flux de données correspondant au premier protocole de réseau, et
- pour générer des données correspondantes aux directives de traduction dans le flux de données, où les directives de traduction sont prévues pour une conversion des données correspondant au premier protocole de réseau en données correspondant au second protocole de réseau.

13. Dispositif selon la revendication 12, **caractérisé en ce que** les informations supplémentaires générées par les moyens (3b) sont insérées dans le flux de données.

14. Dispositif selon la revendication 12 ou 13, **caractérisé en ce que** les informations supplémentaires générées par les moyens (3b) sont transmises entièrement ou partiellement à au moins une connexion au réseau logique ou physique.

15. Dispositif selon la revendication 14, **caractérisé en ce que** la répartition des informations supplémentaires de l'émetteur générées par les moyens (3b) de l'émetteur (3) se produit sur les autres connexions au réseau en raison des protocoles de données utiles côté destinataires, pour lesquels elles sont nécessaires.

16. Dispositif selon l'une des revendications 12 à 15, **caractérisé en ce que** les informations supplémentaires introduites par les moyens (3b) représentent entièrement ou partiellement les données correspondant à un programme ou à une partie de programme de traduction.

17. Dispositif selon l'une des revendications 12 à 16, **caractérisé en ce qu'**il présente une unité d'évaluation (3c), qui est prévue pour une évaluation si une transmission d'un flux de données contenant les directives de traduction nécessite plus de largeur de bande de transmission qu'une transmission du flux de données selon plusieurs protocoles de réseau, et **en ce qu'**il transmet ce flux de données, qui nécessite la largeur de bande de transmission la plus étroite.

18. Dispositif selon la revendication 17, **caractérisé en ce qu'**il effectue une évaluation pour un paquet de données individuel, pour un groupe de paquets de données ou pour l'ensemble du flux de données utiles.

19. Dispositif selon l'une des revendications 12-18, **caractérisé en ce qu'**il présente une unité d'évaluation (3c), qui est prévue pour une évaluation, dans quelle mesure les unités de traduction appropriées sont placées en amont des destinataires reliés au réseau (1), qui prennent en charge uniquement le second protocole de réseau, ou sont intégrées dans celui-ci, et l'émetteur (3) ajoute les directives de traduction ou les programmes de traduction à un flux de données utiles dans la mesure où tous les destinataires ou unités de traduction placées en amont, pour lesquels ce flux de données utiles est déterminé, peuvent transférer ce flux de données utiles dans le second protocole de réseau à l'aide de ces directives ou programmes de traduction.

20. Dispositif selon l'une des revendications 1 à 11, **caractérisé en ce que** les unités de traduction convertissent en données, qui correspondent aux autres protocoles de réseau, des données utiles transmises en utilisant les informations supplémentaires selon un premier protocole de réseau.

21. Dispositif selon la revendication 20, **caractérisé en ce que** les informations supplémentaires sont reçues par un réseau conjointement avec les données utiles transmises selon le premier protocole de réseau.

22. Dispositif selon la revendication 20 ou 21, **caractérisé en ce que** les informations supplémentaires sont reçues au moins partiellement également par au moins un autre réseau logique ou physique.

23. Dispositif selon la revendication 22, **caractérisé en ce que** les informations supplémentaires sont reçues au moins partiellement séparées après les protocoles de réseau, pour lesquels elles sont nécessaires lors de la conversion des flux de données utiles.

24. Dispositif selon une des revendications 20 à 23, **caractérisé en ce que** celles-ci interprètent les informations supplémentaires entièrement ou partiellement en tant que directives de traduction ou programmes ou parties de programme de traduction.

25. Dispositif selon l'une des revendications 20 à 24, **caractérisé en ce que** celles-ci envoient des informations les concernant, qui sont déterminées pour une utilisation dans les unités d'évaluation selon la revendication 18.

26. Dispositif selon l'une des revendications 1 à 11, **caractérisé en ce que** le destinataire est intégré dans les unités de traduction selon l'une des revendications 20 à 25.
